# EUROPÄISCHE PATENTSCHRIFT

(11) **EP 1 576 617 B1**
(45) Veröffentlichungstag und Bekanntmachung des Hinweises auf die Patenterteilung: **04.04.2007**
(21) Anmeldenummer: 04763131.2
(22) Anmeldetag: 08.07.2004
(51) Int. Cl.: G21C 3/12

(54) **BRENNELEMENT FÜR EINEN DRUCKWASSERREAKTOR**
FUEL ASSEMBLY FOR A PRESSURIZED WATER REACTOR
ASSEMBLAGE DE COMBUSTIBLE POUR RÉACTEUR À EAU SOUS PRESSION

(30) Priorität: 10.07.2003 DE 10331425
(43) Veröffentlichungstag der Anmeldung: 21.09.2005
(73) Patentinhaber: AREVA NP GmbH, 91058 Erlangen (DE)
(72) Erfinder: STABEL, Jürgen, 91058 Erlangen (DE); BORSDORF, Udo, 91315 Höchstadt (DE); KUNZ, Heinz-Jürgen, 91056 Erlangen (DE)
(74) Vertreter: Mörtel & Höfner
(86) Internationale Anmeldenummer: PCT/EP2004/007512
(87) Internationale Veröffentlichungsnummer: WO 2005/006348

(56) Entgegenhaltungen:
- DE-U- 20 118 297
- US-A1- 2002 038 929
- PATENT ABSTRACTS OF JAPAN Bd. 1996, Nr. 06, 28. Juni 1996 (1996-06-28) & JP 08 036078 A (MITSUBISHI HEAVY IND LTD), 6. Februar 1996 (1996-02-06) in der Anmeldung erwähnt
- DATABASE WPI Section PQ, Week 199637 Derwent Publications Ltd., London, GB; Class P54, AN 1996-366610 XP002311317 -& JP 08 174307 A (OKUMA CORP) 9. Juli 1996 (1996-07-09)

## Beschreibung

Die Erfindung betrifft ein Brennelement eines Druckwasserreaktors mit einem Endteil und einer das Endteil um einen axialen Überstand überstehenden, durch Verringerung des Überstandes auf Druck beanspruchten Federanordnung, wie es beispielsweise aus der DE 201 18 297 U1 bekannt ist.

Im Druckbehälter eines Druckwasserreaktors stehen die Brennelemente zwischen einer unteren Kerngitterplatte und einer oberen Kerngitterplatte, wobei die Kerngitterplatten an einem Kernbehälter befestigt sind, der in der Regel aus Stahl besteht, während die Strukturteile des Brennelements, die dessen axiale Länge bestimmen, in der Regel aus Gründen der Neutronenabsorption aus einer Zirkoniumlegierung bestehen. Die thermischen Ausdehnungskoeffizienten des Kerngerüst-Materials und des Materials der Brennelement-Strukturteile weichen stark voneinander ab, wobei Stahl sich etwa dreimal so stark ausdehnt wie eine Zirkoniumlegierung. Daher können die Enden des Brennelements nicht starr mit den Kerngittern verbunden werden.

Darüber hinaus muss sichergestellt sein, dass die Brennelemente in ihrer axialen Lage fixiert sind und auch bei unterschiedlichen Betriebsbedingungen (warm, kalt; stationärer Betrieb, An- und Abfahren des Reaktors) immer auf dem unteren Kerngitter aufstehen.

Es ist daher üblich, an einem Ende (meistens dem Brennelement-Kopf) eine über das Brennelement in axialer Richtung überstehende Federanordnung einzusetzen, deren Federkraft das Brennelement bereits bei der Montage in einem vorgegebenen axialen Abstand von dem betreffenden Kerngitter hält und das Brennelement auch noch dann im Abstand hält, d. h. eine ausreichende Niederhaltekraft ausübt, wenn aufgrund unterschiedlicher Ausdehnungskoeffizienten der verwendeten Materialien dieser Abstand im Betrieb zunimmt.

Aufgrund von strahlungsbedingten Materialänderungen erleiden die Brennelemente außerdem im Laufe ihres Lebens ein Längenwachstum, während ein solches Längenwachstum bei dem Kerngerüst praktisch nicht beobachtet wird. Daher muss beim frischen Brennelement ein so großer Abstand zwischen dem Brennelement-Kopf und dem Kerngitter vorhanden sein, dass das Brennelement nicht behindert wird, wenn seine axiale Länge z. B. nach vier Betriebszyklen zugenommen hat. Dieser Zunahme entsprechend muss die Federkraft so ausgelegt sein, dass sowohl verhältnismäßig kleine als auch verhältnismäßig breite Spalte beherrscht werden können.

Zwischen den Kerngitterplatten sind die Brennelemente in einem engen Abstand angeordnet, für den nur geringe Toleranzen zulässig sind, da bei einem Brennelementwechsel abgebrannte Brennelemente aus dem Verband der Brennelemente herausgehoben werden müssen. Es hat sich jedoch gezeigt, dass die Brennelemente mit wachsender Standzeit eine C-förmige oder S-förmige Verbiegung um ihre Längsachse aufweisen können. Bereits verhältnismäßig geringe Verformungen können dazu führen, dass beim Brennelementwechsel Handhabungsprobleme auftreten. Diese Verformung der Brennelemente kann nun durch die auf sie einwirkenden Niederhaltekräfte verstärkt werden. Die von der Federanordnung tatsächlich erzeugten (ausgeübten) Niederhaltekräfte sind dabei notwendigerweise höher als die erforderlichen Niederhaltekräfte. Im Idealfall, d.h. bei optimaler Auslegung, wäre die Differenz aus erzeugter Niederhaltekraft und erforderlicher Niederhaltekraft gleich Null. Im Betriebszustand des Reaktors ist der Auftrieb der Brennelemente gegenüber dem Kaltzustand und somit die erforderliche Niederhaltekraft verringert. Die im Betriebszustand aufgrund des vergrößerten Spaltes und der erhöhten Temperatur verminderte, von der Federanordnung erzeugte Niederhaltekraft kann diesen Effekt jedoch nur zum Teil kompensieren. Damit kann die Differenz aus vorhandener, d.h. von der Federanordnung erzeugter Niederhaltekraft und erforderlicher Niederhaltekraft im Warmzustand gegenüber dem Kaltzustand eher noch ansteigen.

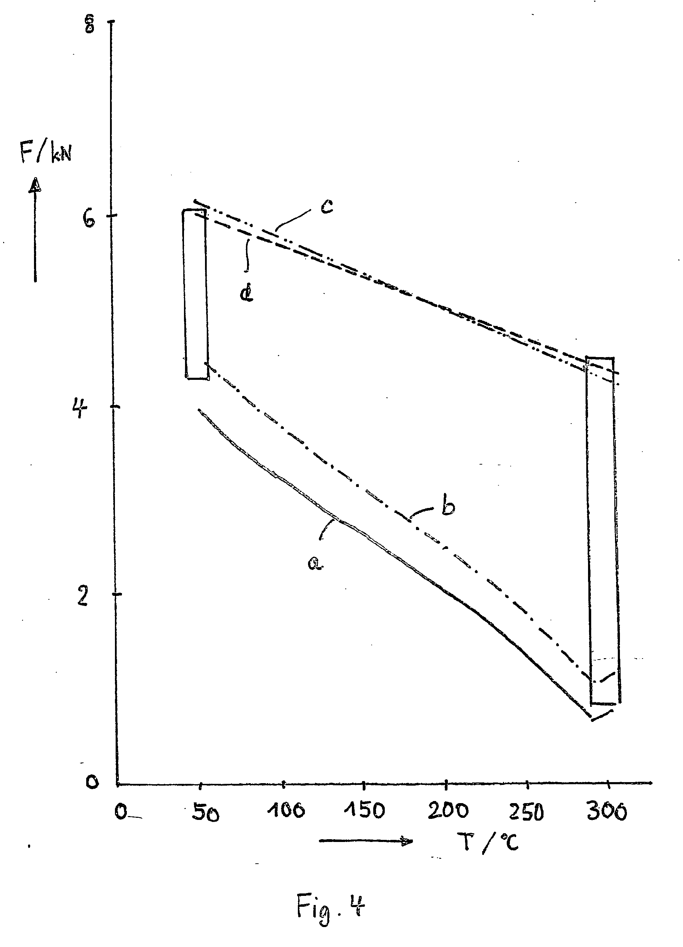

Fig. 4 zeigt nun in einem Diagramm die auf ein Brennelement in Abhängigkeit von der Temperatur T des Kühlmittels ausgeübten Kräfte F. Kurven a und b stellen die Grenzkurven für ein Toleranzband der Niederhaltekräfte F dar, die erforderlich sind, um die auf das Brennelement wirkenden und von der Betriebstemperatur T des Kühlmittels abhängigen statischen und dynamischen Auftriebskräfte zu kompensieren und es auf dem unteren Kerngitter zu halten. In der Fig. ist zu erkennen, dass die erforderlichen Niederhaltekräfte F mit zunehmender Betriebstemperatur T abnehmen.

Kurven c und d stellen die von einer im Stand der Technik bekannten, aus einer Parallelschaltung von 8 identischen Schraubenfedern bestehenden Federanordnung ausgeübte Druckkraft dar, die auf Grund der unterschiedlichen thermischen Ausdehnung von Strukturteilen des Kerngitters und Brennelementes und der damit einhergehenden Spaltvergrößerung mit wachsender Temperatur T ebenfalls, jedoch nicht in demselben Maße wie die Auftriebskräfte abnimmt. Kurve c und d zeigen das Verhalten der Federanordnung bei einem Brennelement zu Beginn bzw. am Ende seiner Einsatzzeit (BOL = Begin Of Life, bzw. EOL = End of Life). Das vorstehend erwähnte strahlungsinduzierte Längenwachstum, das zu einer Verringerung des Spaltes und somit zu einer Erhöhung der Druckkraft am Ende der Einsatzzeit beiträgt, wird kompensiert durch eine mit zunehmender Einsatzzeit durch die Bestrahlung auftretende Relaxation der Federanordnung, so dass die erzeugte Niederhaltekraft am Ende der Einsatzzeit bei hoher Betriebstemperatur T größer sein kann als die Niederhaltekraft zu Beginn der Einsatzzeit.

Der Figur ist nun zu entnehmen, dass die effektive Niederhaltekraft, d. h. die Kraft, mit der das Brennelement auf dem unteren Kerngitter aufsitzt, und die gegeben ist durch die Differenz aus erforderlicher Niederhaltekraft und der von der Federanordnung tatsächlich ausgeübten Niederhalte- oder Druckkraft, bei niedriger Betriebstemperatur deutlich kleiner ist als bei hoher Betriebstemperatur. Diese effektive Niederhaltekraft ist in der Figur als Balken dargestellt. Sie ist typischerweise bei einer Temperatur T von 50°C um etwa 2-3 kN kleiner als bei Betriebstemperatur (etwa 300°C). Mit anderen Worten: Bei Betriebstemperatur sind die von der Federanordnung ausgeübten Kräfte zu hoch und können zu einer unerwünschten Verbiegung des Brennelementes führen.

Aus der JP 08-036 078 A ist ein Brennelement bekannt, bei dem zum Erzeugen der Niederhaltekraft eine aus mehreren Federn bestehende Federanordnung vorgesehen ist, um auf diese Weise eine passende Niederhaltekraft für die gesamte Einsatzdauer des Brennelementes zu gewährleisten. Bei der bekannten Ausführungsform wird hierzu mittels einer verschiebbar gelagerten und von einer ersten Feder betätigbaren Schlittens ab einem vorgegebenen Federweg eine Mehrzahl von zweiten Federn in Reihe geschaltet. Eine solche Federanordnung ist jedoch konstruktiv aufwendig.

Der Erfindung liegt nun die Aufgabe zugrunde, ein Brennelement anzugeben, bei dem mit geringem technischen Aufwand die auf das Brennelement im Druckwasser-Reaktor wirkenden axialen Verformungskräfte zumindest im Bereich hoher Betriebstemperatur verringert sind.

Die genannte Aufgabe wird gemäß der Erfindung gelöst mit einem Brennelement mit den Merkmalen des Patentanspruches 1. Ein solches Brennelement für einen Druckwasserreaktor umfasst ein Endteil und eine über das Endteil um einen axialen Überstand überstehende, durch Verringerung des Überstandes auf Druck beanspruchbare Federanordnung mit wenigstens einem ersten und einem dazu permanent in Reihe geschalteten zweiten Federelement, wobei eines der Federelemente derart vorgespannt ist, dass die Federrate der Federanordnung unterhalb einer vorgegebenen Grenzkraft ausschließlich vom anderen Federelement erzeugt wird.

Durch diese Maßnahme kann die Federcharakteristik der Federanordnung auf einfache Weise derart eingestellt werden, dass die effektive Niederhaltekraft insbesondere bei hohen Betriebstemperaturen des Kühlmittels einen vorgegebenen Grenzwert nicht überschreitet und die im Stand der Technik auftretende Erhöhung der Niederhaltekraft bei hohen Betriebstemperaturen weitgehend vermieden ist, ohne dass es hierzu beweglicher Verriegelungs oder Entriegelungsmechanismen bedarf.

In einer vorteilhaften Ausführungsform der Erfindung tragen das erste und zweite Federelement oberhalb der vorgegebenen Grenzkraft zur Federrate bei. Dadurch kann die im warmen Betriebszustand maximal vorhandene Niederhaltekraft, die sich aus den bei eingebauten Brennelementen vorliegenden, relativ großen Toleranzen ergibt, durch die nunmehr aufgrund der Reihenschaltung weichere Federanordnung stark abgesenkt werden. Entsprechend ist auch die im Mittel vorhandene Niederhaltekraft verringert.

In einer vorteilhaften Ausgestaltung der Erfindung hat das erste Federelement eine kleinere Federrate als das zweite Federelement und ist mit der Grenzkraft derart vorgespannt, dass das härtere zweite Federelement bei Erreichen der Grenzkraft auf Anschlag geht, so dass die bei einer Erhöhung der Druckkraft verbleibende Federkraft ausschließlich vom ersten Federelement erzeugt wird und auf diese Weise große Toleranzen durch das weichere erste Federelement abgefangen werden.

Zur weiteren Erläuterung der Erfindung wird auf die Zeichnung verwiesen. Es zeigen:
- Fig. 1: zwei alternative Ausgestaltungen des Endteils eines Brennelementes gemäß der Erfindung in einer Draufsicht bzw. einem Teilschnitt,
- Fig. 2: ein Diagramm, in dem die von der erfindungsgemäßen Federanordnung ausgeübte Federkraft in Abhängigkeit vom Federweg aufgetragen ist,
- Fig. 3: ein Diagramm, in dem die auf ein gemäß Fig. 1a und 1b gestaltetes Brennelement wirkenden Kräfte gegen die Betriebstemperatur des Kühlmittels aufgetragen ist,
- Fig. 4: ein Diagramm, in dem die auf ein Brennelement gemäß dem Stand der Technik wirkenden Kräfte gegen die Betriebstemperatur des Kühlmittels aufgetragen sind.

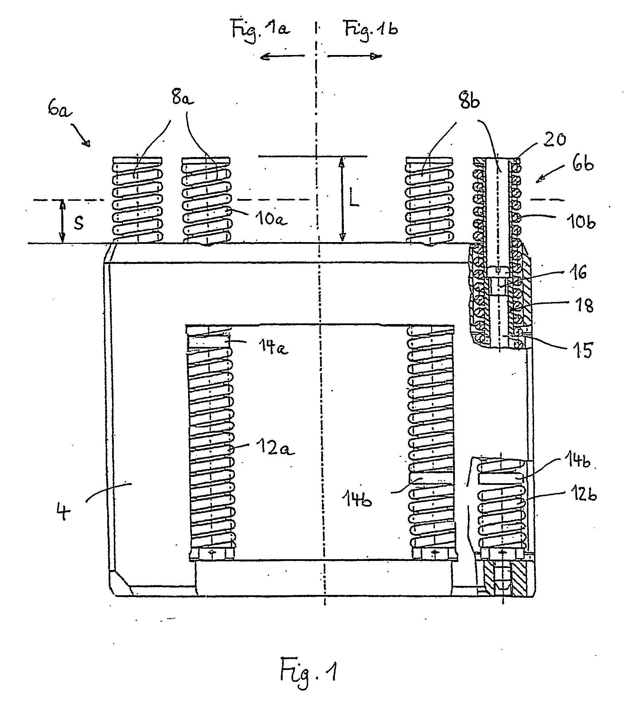

Gemäß Fig. 1 umfasst ein Brennelement 2 ein Endteil 4, im Beispiel ein als quaderförmiger Rahmen ausgebildetes Kopfteil, in dem eine Federsystem 6a,b gelagert ist, das aus einer Mehrzahl von parallel geschalteten Federanordnungen 8a,b, im Beispiel 8 Federanordnungen, von denen nur 4 sichtbar sind, besteht. Die Federanordnungen 8a,b weisen in ihrer Ruhelage einen über das Kopfteil vorstehenden Überstand Lₐ, L_{b} auf, der größer ist als die Breite des sich zwischen dem oberen Kerngitter und dem Kopfteil im eingebauten Zustand des Brennelementes befindlichen Spaltes s, der in der Figur durch eine gestrichelte Linie angedeutet ist. In der Figur ist aus Gründen der Einfachheit Lₐ = L_{b} = L

Die zueinander parallel geschalteten Federanordnungen 8a,b sind jeweils aus einem ersten Federelement 10a,b und einem dazu in Serie geschalteten zweiten Federelement 12a,b mit den Federraten cₐ₁, cₐ₂ bzw. c_{b1}, c_{b2} zusammengesetzt. In der Figur ist die Reihenschaltung der Federelemente 10a,b und 12a,b durch einen zwischengelegten Stützflansch 14a,b angedeutet.

In der Ausführungsform gemäß Fig. 1a ist das erste Federelement 10a derart vorgespannt, dass die Federrate cₐ der Federanordnung 8a bei einer auf die Federanordnung 8a wirkenden Druckkraft, die kleiner ist als eine Grenzkraft F_{Ga}, allein durch die Federrate cₐ₂ des zweiten Federelementes 12a bestimmt ist. Das erste Federelement 10a hat im Ausführungsbeispiel eine größere Federrate cₐ₁ > cₐ₂. Bei Erreichen der vorgegebenen Grenzkraft F_{Ga} geht das zweite Federelement 12a auf Anschlag (die Federwindungen berühren sich), so dass die Federrate cₐ der gesamten Federanordnung 8a nur noch vom ersten, härteren Federelement 10a bestimmt und auf diese Weise größer ist als die Federrate cₐ = cₐ₂ der Reihenschaltung vor Anschlag des zweiten Federelementes 12a.

Eine alternative Ausgestaltung ist in der Teilfig. 1b dargestellt, deren Federsystem 6b Federanordnungen 8b enthält, die ebenfalls jeweils aus einer Reihenschaltung eines ersten Federelementes 10b und eines zweiten Federelementes 12b bestehen, die durch einen Stützflansch 14b voneinander räumlich getrennt sind. In diesem Ausführungsbeispiel weist jedoch das erste Federelement 10b eine niedrigere Federrate c_{b1} < c_{b2} auf als das zweite Federelement 12b, ist aber derart mit einer Vorspannkraft vorgespannt, dass bei kleinen Auslenkungen nur das zweite Federelement 12b mit der größeren Federrate c_{b2} auf Druck beansprucht wird. Die Federrate c_{b} der Federanordnung 8 ist somit bis zu einer Grenzkraft F_{Gb} gleich der Federrate c_{b2} des zweiten Federelementes 12b. Das zweite Federelement 12b mit der größeren Federrate c_{b2} kann so bemessen sein, dass es bei Erreichen der Grenzkraft F_{Gb}, die gleich der auf das erste Federelement 10b wirkenden Vorspannkraft sein kann, auf Anschlag geht, so dass für Druckkräfte größer als diese Grenzkraft F_{Gb} die Federrate c_{b} der Federanordnung 8b ausschließlich durch das erste Federelement 10b mit der niedrigeren Federrate c_{b1} bestimmt wird.

Grundsätzlich ist jedoch auch eine Ausführungsform möglich, bei der das zweite Federelement 12b nicht auf Anschlag geht, so dass die bei Überschreiten der Grenzkraft F_{Gb} wirkende Federrate c_{b} durch die nunmehr wirksame Reihenschaltung des ersten und zweiten Federelementes 10b, 12b gemäß 1/c_{b} = 1/c_{b1} + 1/c_{b2} bestimmt und stets kleiner ist als die Federrate c_{b2} des zweiten Federelementes 12b. In dieser Ausführungsform ist es auch nicht erforderlich, dass das zweite, nicht vorgespannte Federelement 12b eine größere Federrate c_{b2} als das erste Federelement 10b aufweist.

Dies hat den Vorteil, dass damit insbesondere im für die Durchbiegung der Brennelemente kritischen warmen Betriebszustand die vorhandenen Niederhaltekräfte weich abgefangen werden.

In der Darstellung gemäß Fig. 1b ist zu erkennen, dass die Vorspannung mit einem im Kopfteil eingeschraubten, im Inneren der Federanordnung 8b befindlichen Bolzen 15 erfolgt, der an seinem freien Ende mit einer Stellschraube 16 versehen ist. Der Kopf der Stellschraube 16 stützt sich auf einer ringförmigen Innenschulter einer im Inneren des ersten Federelementes 10b angeordneten Hülse 18 ab, die an ihrem über das Federelement 10b hinausragendes Ende ein ringförmigen Stützflansch 20 aufweist, an dem sich das Federelement 10b abstützt. In gleicher Weise kann auch die Vorspannung gemäß dem in Fig. 1a dargestellten Ausführungsbeispiel erfolgen.

In den Teilfig. 1a, b sind als Federelemente jeweils zwei separate Schraubenfedern veranschaulicht. Grundsätzlich ist es auch möglich, die Federanordnungen jeweils aus einer einzigen Schraubenfeder aufzubauen, die als Federelemente Bereiche mit unterschiedlich enger Wicklung aufweisen. Außerdem können auch grundsätzlich in jeder Federanordnung mehr als zwei Federelemente (separate Federn oder unterschiedliche Wicklungsbereiche) vorgesehen sein. Anstelle von Schraubenfedern können auch geeignet dimensionierte und zusammengesetzte Tellerfederpakete oder Blattfedern vorgesehen sein.

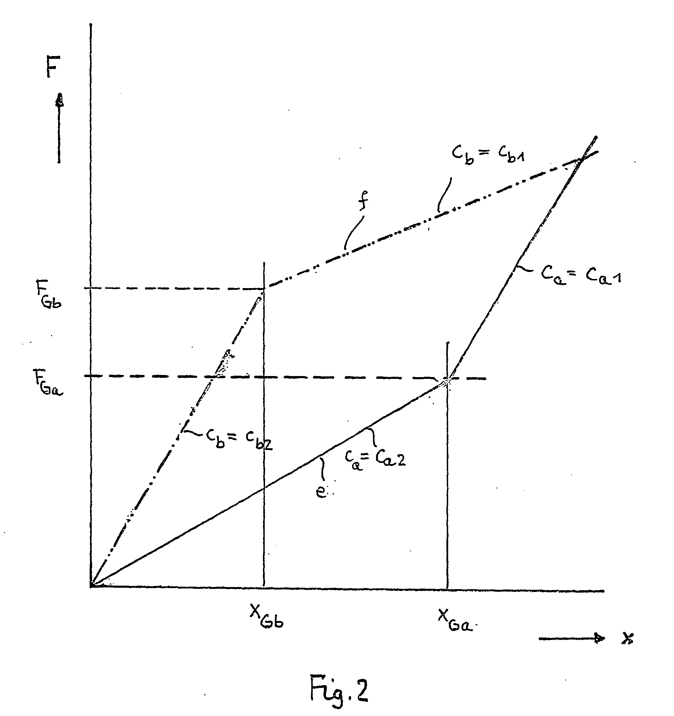

Fig. 2 zeigt nun anhand eines Prinzipbildes die von den in Fig. 1 dargestellten Federanordnungen 8a, b in Abhängigkeit ihrer Auslenkung x = L_{a,b}-s ausgeübte Druckkraft F. Kurven e und f geben das Verhalten der Federanordnungen 8a bzw. 8b gemäß Teilfigur 1a bzw. Teilfigur 1b wieder.

Gemäß Kurve e ist zu Beginn der Auslenkung die Federrate cₐ der aus erstem Federelement 10a und zweitem Federelement 12a bestehenden Reihenschaltung ausschließlich durch die Federrate cₐ₂ des zweiten Federelementes 12a gegeben. Ab einer bestimmten Grenzkraft F_{Ga}, zu dem für die Reihenschaltung der Federelemente 10a und 12a die Auslenkung x_{Ga} gehört, geht das zweite Federelement 12a auf Anschlag, so dass die sich nunmehr einstellende Federrate cₐ ausschließlich vom ersten Federelement 10a bestimmt wird, die größer ist als die Federrate cₐ₂ des zweiten Federelementes 12a. Mit anderen Worten: Die Federrate cₐ der Federanordnung 8a nimmt bei der Auslenkung x = x_{Ga} sprunghaft zu oder bei umgekehrter Betrachtungsweise sprunghaft ab.

Anders stellt sich die Situation im Ausführungsbeispiel gemäß Fig. 1b (Kurve f) dar, bei der bis zur Grenzkraft F_{Gb}, d.h. der Vorspannkraft des weicheren Federelementes 10b, ausschließlich das zweite Federelement 12b mit der Federrate c_{b2} die Federrate c_{b} der Federanordnung 8b bestimmt. Ist dieses zweite Federelement 12b derart dimensioniert, dass es genau bei der Vorspannkraft des ersten Federelementes 10b auf Anschlag geht (Auslenkung x_{Ga}), so wird die weitere Kompression der gesamten Federanordnung 8b ausschließlich durch die Federrate c_{b1} des ersten Federelementes 10b bestimmt. Ist dieses wie im Ausführungsbeispiel dargestellt weicher als das zweite Federelement 12b nimmt somit die Federrate c_{b} der Federanordnung 8b sprunghaft bei Erreichen der Grenzkraft F_{Gb} ab. Der gleiche Kurvenverlauf lässt sich auch erzeugen, wenn die Federrate c_{b1} des ersten Federelementes 10b größer oder gleich der Federrate c_{b2} des zweiten Federelementes 12b ist und das zweite Federelement 12b nicht auf Anschlag geht.

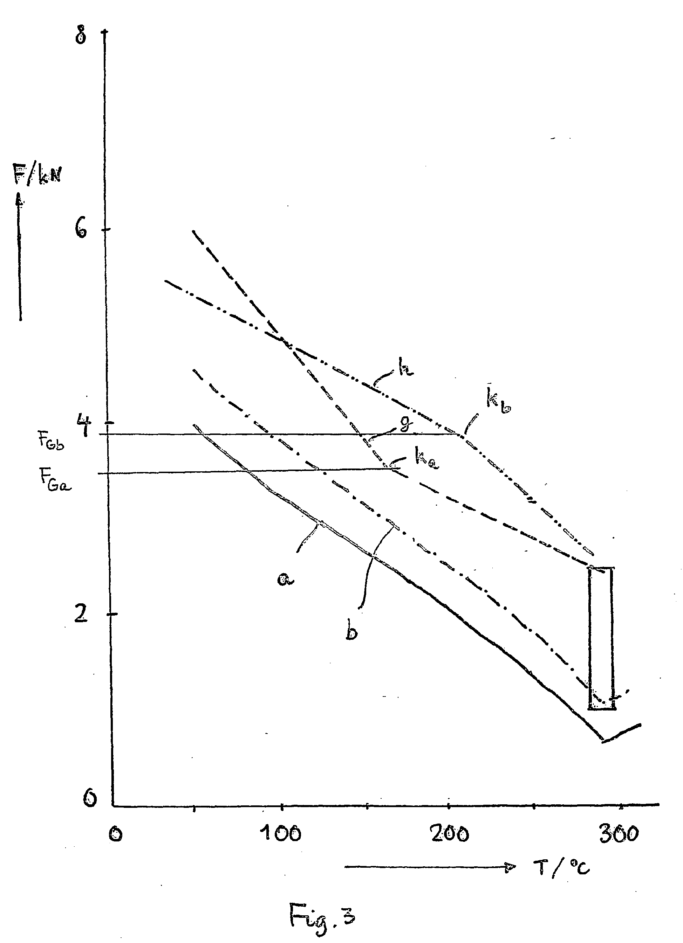

Fig. 3 zeigt nun eine Situation, wie sie sich für die Ausführungsbeispiele gemäß Teilfig. 1a, b und Fig. 2 ergibt. Kurven a und b entsprechen dem vorstehend anhand Fig. 4 bereits näher erläuterten Toleranzband für die auf das Brennelement statisch und dynamisch wirkenden Auftriebskräfte.

Mit zunehmender Betriebstemperatur T des Kühlmittels nimmt auf Grund der größeren Längenausdehnung des Kerngerüstes die Spaltweite s zu und damit die von den Federanordnungen 8a, b jeweils ausgeübte Druckkraft ab. Kurven g und h geben in Prinzipdarstellung die Situation wieder, wie sie sich durch die Federanordnungen 8a bzw. b ergibt.

Im linken Teil der Kurve g, d.h. bis zum Knickpunkt Kₐ ist die Federrate cₐ der Federanordnung 8a ausschließlich durch die Federrate cₐ₁ des steiferen ersten Federelementes 10a bestimmt, da sich das weichere zweite Federelement 12a im Anschlag befindet. Mit zunehmender Betriebstemperatur T des Kühlmittels nimmt die Spaltweite s zu, so dass die auf die Federanordnung 8a wirkende Druckkraft F die Grenzkraft F_{Ga} unterschreitet. Dies hat zur Folge, dass die Federrate cₐ sprunghaft abnimmt, so dass die von der Federanordnung 8a ausgeübte Kraft rechts vom Knickpunkt Kₐ mit zunehmender Betriebstemperatur T weniger steil abfällt als links davon.

Das anhand von Fig. 2 in Kurve f dargestellte Ausführungsbeispiel ist in Fig. 3 in Kurve h veranschaulicht. In diesem Ausführungsbeispiel ist zunächst der Abfall der von der Federanordnung 8b ausgeübten Kraft bestimmt durch die Federrate c_{b1} des weicheren ersten Federelementes 10b oder, falls beide Federelemente 10b,12b wirksam sind durch die ebenfalls kleinere Federrate 1/c_{b} = 1/c_{b1} + 1/c_{b2} der Reihenschaltung. Bei Erreichen der Grenzkraft F_{Gb} (Knickpunkt K_{b}) nimmt dann die Federkraft aufgrund der höheren Steifigkeit c_{b2} des nunmehr allein wirksamen zweiten Federelementes 12b steiler ab, wie dies in der Kurve h rechts vom Knickpunkt K_{b} ersichtlich ist.

Durch geeignete Kombination zweier oder mehrerer Federelemente in einer Federanordnung ist es möglich, eine nichtlineare Federkennlinie zu erzeugen, bei der die effektive Niederhaltekraft über den gesamten Betriebstemperaturbereich vergleichmä-ßigt ist, d. h. bei der die Kurven g, h annähernd parallel zu den Kurven a, b verlaufen, und kritische Werte nicht überschreitet.

### Bezugszeichenliste

- 2: Brennelement
- 4: Endteil
- 8a,b: Federanordnung
- 10a,b: erstes Federelement
- 12a,b: zweites Federelement
- 14a,b: Stützflansch
- 15: Bolzen
- 16: Stellschraube
- 18: Hülse
- 20: Stützflansch

- L: Überstand
- F_{Ga}, F_{Gb}: Grenzkraft
- cₐ, c_{b}, cₐ₁, cₐ₂, c_{b1}, c_{b2}: Federrate
- F_{Ga}, F_{Gb}: Grenzkraft

## Patentansprüche

1. Brennelement (2) für einen Druckwasserreaktor mit einem Endteil (4) und einer über das Endteil (4) um einen axialen Überstand (L) überstehenden, durch Verringerung des Überstandes (L) auf Druck beanspruchbaren Federanordnung (8a,b) mit wenigstens einem ersten (10a,b) und einem dazu permanent in Reihe geschalteten zweiten Federelement (12a,b), wobei eines der Federelemente (10a,b) derart vorgespannt ist, dass die Federrate (cₐ,c_{b}) der Federanordnung (8a,b) unterhalb einer vorgegebenen Grenzkraft (F_{Ga}, F_{Gb}) der Federrate des anderen Federelements (12a,b) gleich ist.

2. Brennelement nach Anspruch 1, bei dem das erste und zweite Federelement (10b bzw. 12b) oberhalb der vorgegebenen Grenzkraft (F_{Ga}) zur Federrate (c_{b}) beitragen.

3. Brennelement nach Anspruch 1, bei dem das erste Federelement (10b) eine kleinere Federrate (c_{b1}) hat als das zweite Federelement (12b), und bei dem das erste Federelement (10b) mit der Grenzkraft (F_{Gb}) derart vorgespannt ist, dass die Federrate (c_{b}) bis zum Erreichen der Grenzkraft (F_{Gb}) ausschließlich vom zweiten Federelement (12b) erzeugt wird, das bei Erreichen der Grenzkraft (F_{Gb}) auf Anschlag geht, so dass die verbleibende Federkraft (c_{b}) ausschließlich vom ersten Federelement (10b) erzeugt wird.

## Claims

1. Fuel assembly (2) for a pressurized water reactor, having an end segment (4) and a spring arrangement (8a, b) which protrudes over the end segment (4) by an axial protrusion distance (L), can be subjected to pressure by reducing the protrusion distance (L), and has at least one first spring element (10a, b) and a second spring element (12a, b) which is permanently series-connected to the first spring element (10a, b), wherein one of the spring elements (10a, b) is pre-stressed such that the spring rate (cₐ, c_{b}) of the spring arrangement (8a, b) below a predetermined limit force (F_{Ga}, F_{Gb}) is equal to the spring rate of the other spring element (12a, b).

2. Fuel assembly according to Claim 1, in which the first and the second spring elements (10b and 12b, respectively) above the predetermined limit force (F_{Ga}) contribute to the spring rate (c_{b}).

3. Fuel assembly according to Claim 1, in which the first spring element (10b) has a smaller spring rate (c_{b1}) than the second spring element (12b) and in which the first spring element (10b) is pre-stressed with the limit force (F_{Gb}) such that, until the limit force (F_{Gb}) is reached, the spring rate (c_{b}) is produced solely by the second spring element (12b), which is fully compressed when the limit force (F_{Gb}) is reached, so that the remaining spring force (c_{b}) is produced solely by the first spring element (10b).

## Revendications

1. Assemblage (2) combustible pour un réacteur à eau sous pression, comprenant une pièce (4) d'extrémité et un dispositif (8a, b) à ressort dépassant axialement de la pièce (4) d'extrémité d'un dépassement (L) axial pouvant être sollicité à la compression par diminution de la distance (L) et ayant au moins un premier élément (10a, b) à ressort et un deuxième élément (12a, b) à ressort monté en permanence en série avec le premier, dans lequel l'un des deux éléments (10a, b) à ressort est mis sous tension préalable de sorte que la raideur (cₐ, c_{b}) du dispositif (8a, b) à ressort soit, en-dessous d'une force (F_{Ga}, F_{Gb}) limite prescrite, égale à la raideur de l'autre élément (12a, b) à ressort.

2. Assemblage combustible suivant la revendication 1, dans lequel le premier et le deuxième éléments (10b et 12b) à ressort contribuent à la raideur (c_{b}) au-dessus de la force (F_{Ga}) limite prescrite.

3. Assemblage combustible suivant la revendication 1, dans lequel le premier élément (10b) à ressort à une raideur (c_{b1}) plus petite que le deuxième élément (12b) à ressort et dans lequel le premier élément (10b) à ressort est mis sous tension préalable par la force (F_{Gb}) limite de façon à ce que la raideur (c_{b}) soit produite jusqu'à ce que l'on atteigne la force (F_{Gb}) limite exclusivement par le deuxième élément (12b) à ressort qui, lorsque la force (F_{Gb}) limite est atteinte, vient en butée de sorte que la force (c_{b}) de ressort restante est produite exclusivement par le premier élément (10b) à ressort.
